# EUROPÄISCHE PATENTSCHRIFT

(11) **EP 0 515 841 B1**
(45) Veröffentlichungstag und Bekanntmachung des Hinweises auf die Patenterteilung: **22.06.1994**
(21) Anmeldenummer: 92107082.7
(22) Anmeldetag: 25.04.1992
(51) Int. Cl.: F02B 51/00, F02M 25/00, B60K 15/00

(54) **Verfahren zur gesteuerten Zugabe eines Additivs in den Kraftstoffvorrat einer Fahrzeug-Brennkraftmaschine**
Method for the controlled supply of an additive into the fuel stock of a vehicle combustion engine
Méthode pour l'addition contrôlée d'un additif dans la réserve de carburant d'un moteur à combustion interne d'un véhicule

(30) Priorität: 25.05.1991 DE 4117148
(43) Veröffentlichungstag der Anmeldung: 02.12.1992
(73) Patentinhaber: MERCEDES-BENZ AG, 70327 Stuttgart (DE)
(72) Erfinder: Schulte, Roland, W-7057 Leutenbach (DE); Langer, Hans-Joachim, W-7148 Remseck (DE); Strohmer, Erwin, W-7069 Berglen (DE); Hagenloch, Dietmar, W-7000 Stuttgart 50 (DE)

(56) Entgegenhaltungen:
- DE-C- 3 626 419
- US-A- 4 596 277
- AUTOMOTIVE ENGINEERING Bd. 93, Nr. 8, August 1985, PENSYLVANIS Seiten 70 - 78; SIMON & STARK: 'fuel additives'

## Beschreibung

Die Erfindung betrifft ein Verfahren zur gesteuerten Zugabe eines Additivs in den Kraftstoffvorrat einer Fahrzeug-Brennkraftmaschine nach dem Oberbegriff des Patentanspruchs 1.

Eine derartige Additivdosierung ist aus DE-C-36 26 419 bekannt. Dort wird bei jedem Stillstand des Fahrzeuges über einen vorgegebenen Zeitraum hinaus kontrolliert, ob eine Kraftstoffüllstandserhöhung erfolgt. Wird eine solche festgestellt, so wird dies als Indiz für eine Kraftstoffzugabe durch Zutanken gewertet mit der Folge, daß eine der Kraftstoffüllstandserhöhung proportionale Additivzugabe vorgenommen wird. Bei dieser Methode kann die Additivzugabe bei stehendem Fahrzeug erfolgen. Da bei stehendem Fahrzeug der Geräuschpegel im Inneren des Fahrzeuges auch bei laufendem Motor bei hochwertig verarbeiteten Fahrzeugen gewöhnlich äußerst niedrig liegt, wird das durch eine Additivzugabe ausgelöste Geräusch der das Additiv zu dem Kraftstoff führenden Pumpe von dem Fahrer häufig als ungewöhnliches Störgeräusch empfunden. Insbesondere hier eine Verbesserung zu schaffen, ist eine wesentliche Aufgabe der vorliegenden Erfindung. Dabei kommt es nach der Erfindung weiterhin darauf an, Fehlmessungen, die sich durch eine Schieflage des Fahrzeuges beim Tanken dann ergeben können, wenn die Füllstandsvergleichsmessungen nicht ausschließlich bei gleicher Fahrzeuglage erfolgt sind, auszuschließen bzw. zumindest zu minimieren.

Gelöst wird dieser Problemkomplex durch ein gattungsgemäßes Regelverfahren nach den kennzeichnenden Merkmalen des Patentanspruchs 1.

Bei diesem Verfahren werden bei sich bewegendem Fahrzeug, wobei der Fahrzustand durch einen an sich bekannten Geschwindigkeitsgeber festgestellt wird, kontinuierlich aus Einzelmeßwerten über eine bestimmte Zeitdauer gemittelte Füllstandsmeßwerte jeweils der Reihe nach miteinander verglichen, d.h. der jeweils letzte Mittelwert wird mit dem jeweils vorletzten Mittelwert verglichen. Sobald bei diesem Vergleich eine über ein vorgegenenes bestimmtes Toleranzmaß hinausgehene Differenz festgestellt wird, wird dies als entsprechende Kraftstoffvolumenzunahme gewertet und zur Vornahme einer der Kraftstoffvorratszunahme proportionalen Additivzugabe mittels einer Pumpe benutzt. Bei diesem Verfahren kommt es auf einen Stillstand des Fahrzeuges nicht an. Es wäre vielmehr möglich, das Fahrzeug während des Fahrens aufzutanken. Die Additivzugabe würde in diesem Falle in gleicher Weise funktionieren.

Dadurch, daß bei dem erfindungsgemäßen Additiv-Zugabeverfahren nur während des Fahrbetriebes über mehrere Zeitintervalle gemittelte Füllstandsmeßwerte zur Auswertung herangezogen werden, kann eine Zudosierung automatisch nur während des Fahrbetriebes erfolgen. Dies hat den Vorteil, daß bedingt durch einen im Fahrbetrieb im Vergleich zum Fahrzeugstillstand höheren Geräuschpegel im Fahrzeuginnenraum das von der Dosierpumpe ausgehende Geräusch gar nicht oder zumindest nicht als ungewöhnliches Störgeräusch von dem Fahrer aufgefaßt werden kann.

Damit das Dosierpumpengeräusch im Fahrzeuginnenraum auch mit Sicherheit nicht als störend empfunden werden kann, wird das Einschalten der Dosierpumpe noch zusätzlich von dem Erreichen eines vorbestimmten Fahrgeschwindigkeitswertes abhängig gemacht.

Durch die Auswertung lediglich über mehrere Zeitintervalle gemittelter Meßwerte scheiden Fehldiagnosen durch Messungen bei zeitweise unterschiedlichen Schieflagen des Fahrzeuges weitgehendst aus.

Die nur bei fahrendem Fahrzeug erfolgenden Einzelmessungen können beispielsweise in Zeitintervallen von 0,01 Zeiteinheiten / sec. erfolgen. Zur Mittelwertbildung können jeweils ca. 10 000 Zeitintervalle ausgewertet werden. Die gemittelten Werte werden jeweils auf eine Kraftstoffüllmengenerhöhung hin verglichen und zwar der jeweils letzte mit dem jeweils vorletzten Wert. Nach dem Vergleich wird der jeweils vorletzte Wert mit dem letzten Wert überschrieben und solange gespeichert, bis er mit einem neuen Wert überschrieben wird. Für diesen Ablauf ist es gleichgültig, ob das Fahrzeug zwischenzeitlich anhält oder ob der Motor ausgeschaltet wird oder nicht. In dem Meßwertspeicher bleibt der jeweils zuletzt gespeicherte Mittelwert stets so lange erhalten, bis er nach einem Vergleich mit einem neuen Wert überschrieben wird. Das Überschreiben erfolgt dabei unabhängig davon, wie der Vergleich ausgefallen ist. Der Ausgang des Vergleichs ist allein dafür maßgebend, ob eine Zudosierung erfolgen soll oder nicht.

Um die Zudosierung unabhängig von zufälligen fahrbedingten Schwankungen in der Füllstandshöhenanzeige zu machen, die auch durch die Mittelwertbildung in ungünstigen Fahrsituationen nicht absolut sicher ausgeschlossen werden können, muß eine bestimmte frei vorgebbare Meßwertdifferenz überschritten sein, bevor eine Zudosierung aktiviert wird. Diese Toleranzschwelle kann beispielsweise experimentell ermittelt und danach optimal eingestellt werden.

Eine schematische Darstellung der erfindungsgemäßen Additivzugabe in den Fahrzeug-Kraftstoffvorrat ist in der Zeichnung dargestellt.

Es zeigen:

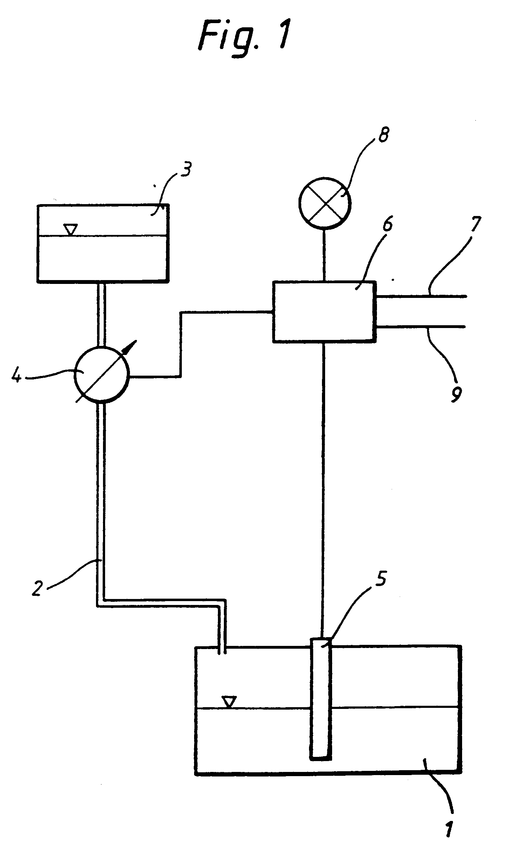

- Fig. 1: die Dosieranlage in einer schematischen Darstellung,
- Fig. 2: die Funktionsweise der Anlage aus Fig. 1 in Form eines Flußdiagramms.

Ein Kraftstoff-Vorratsbehälter 1 ist über eine Leitung 2 mit einem Additiv enthaltenden Zusatztank 3 verbunden. Die Additiv-Zugabe in den Kraftstoff-Vorratsbehälter 1 erfolgt über eine Dosierpumpe 4. Ein in dem Vorratsbehälter 1 vorgesehener Tankgeber 5 mißt den jeweiligen Füllstand des Vorratsbehälters 1. Den Meßwert leitet der Tankgeber 1 an eine Additiv-Dosier-Elektronik 6. Dort erfolgt die erfindungsgemäße Meßwertauswertung, wozu diese Elektronik 6-Einrichtung mit einem die Geschwindigkeit des Fahrzeuges wiedergebenden Signal 7 versorgt wird. Die Dosierpumpe 4 für die Additiv-Zugabe in den Vorratsbehälter 1 wird von der Elektronik 6-Einrichtung aus gesteuert. Zur Funktionskontrolle der Elektronik 6-Einrichtung ist an diese eine Fehler-Anzeige-Signalvorrichtung 8 angeschlossen, die bei einer Funktionsstörung beispielsweise ein Blinksignal aussenden kann. Die Spannungsversorgung der Elektronik 6-Einrichtung erfolgt über die Zuleitung 9.

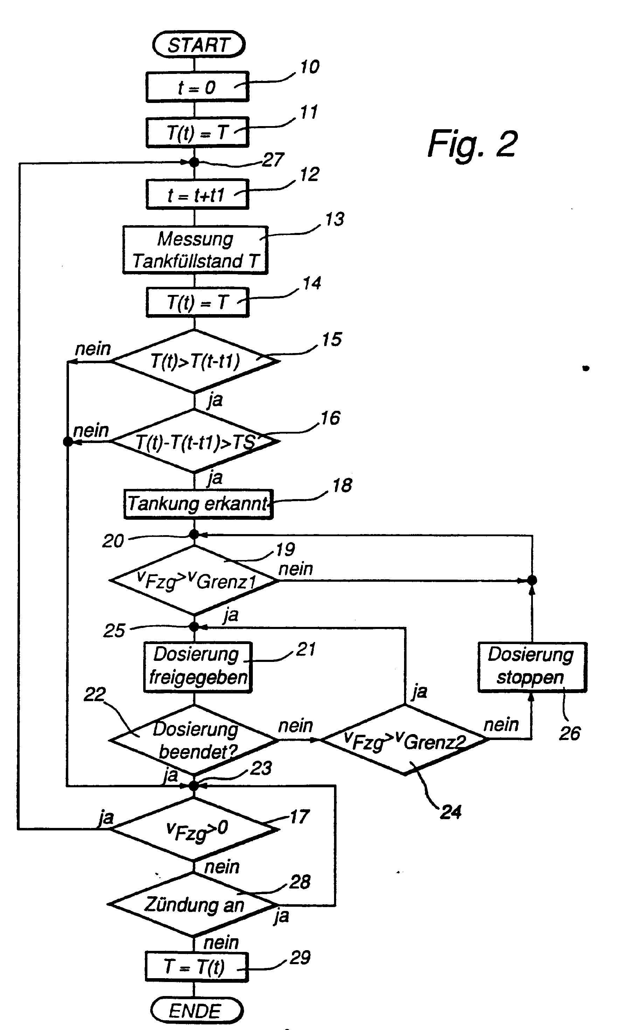

Die Arbeitsweise der Elektronik-Einrichtung ergibt sich aus dem Flußdiagramm der Fig. 2 wie folgt:

Im Block 10 wird zunächst ein Zeitgeber zurückgesetzt (t = 0). Im nachfolgenden Block 11 wird der beim letzten Abstellen der Brennkraftmaschine abgespeicherte Tankfüllstand T als aktueller Tankfüllstand T (t) zum Zeitpunkt t = 0 zugeordnet. Nach Ablauf eines vorgegebenen Zeitintervalls t1 (Block 12) erfolgt im Eingabeblock 13 eine erneute Messung des aktuellen Tankfüllstandes, der gemäß Block 14 als neuer aktueller Wert T (t) abgelegt wird.
Im daran anschließenden Verzweigungsblock 15 wird überprüft, ob der derzeit aktuelle Tankfüllstand T (t) größer ist als der zum Zeitpunkt t - t1 gemessene Füllstand von T (t - t1), d.h., es wird überprüft, ob der Tankfüllstand zwischen zwei Messungen sich erhöht hat.
Falls ja, wird im nächsten Verzweigungsblock 16 überprüft, ob diese Füllstandszunahme T (t) - T (t1) größer ist als ein vorgegebener Schwellwert T_{Schwelle}. Falls nein, so erfolgt (wie auch im Falle der mit Nein zu beanwortenden Abfrage im Block 15) eine Verzweigung nach Punkt 23 zur anschließenden Überprüfung im Abfrageblock 17, ob der Motor noch in Betrieb ist oder zwischenzeitlich abgestellt wurde.
Ist der vorgegebene Schwellwert T_{Schwelle} überschritten (Block 16) wird gemäß Block 18 auf einen Tankvorgang erkannt. Im nachfolgenden Verzweigungsblock 19 wird abgefragt, ob die aktuelle Fahrzeuggeschwindigkeit v_{Fzg} größer ist als ein vorgegebener v_{Grenz1}. Falls nein, so erfolgt eine Verzweigung nach Punkt 20 zur erneuten Abfrage im Block 19. Erst wenn eine aktuelle Fahrzeuggeschwindigkeit (v_{Fzg}) größer ist als dieser Grenzwert v_{Grenz1} wird im Operationsblock 21 die Dosierung des Kraftstoff-Zusatzmittels freigegeben.
Solange die Dosierung erfolgt (Block 22), verzweigt die Steuerung zum Abfrageblock 24, in welchem überprüft wird, ob die momentane Fahrzeuggeschwindigkeit v_{Fzg} größer ist als ein zweiter Grenzwert v_{Grenz2}. Falls ja, wird durch Verzweigung zum Punkt 25 die Dosierung fortgesetzt.
Falls nein, so wird im Block 26 die Dosierung unterbrochen und nach Punkt 20 verzweigt. Die Dosierung wird dann wieder freigegeben, wenn die Abfrage im Abfrageblock 19 mit Ja beantwortet wird.

Ist die Dosierung beendet (Verzweigungsblock 22), wird im Verzweigungsblock 17 abgefragt, ob das Fahrzeug sich bewegt. Falls ja, so verzweigt die Steuerung zum Punkt 27 zur erneuten Messung des Tankfüllstandes T im Block 13 nach Ablauf eines weiteren Zeitintervalls t1 (Block 12).

Ergibt sich im Block 17, daß das Fahrzeug steht (v_{Fzg} = 0), so wird in den Abfrageblock 28 verzweigt und überprüft, ob die Zündung eingeschaltet ist. Wenn ja, so verzweigt die Steuerung wieder zum Punkt 23.
Falls nein (also der Motor zwischenzeitlich abgestellt wurde), so wird im Block 29 der aktuelle Tankfüllstand abgespeichert. Dieser abgespeicherte Wert dient nach dem nächsten Start des Motors als erster aktueller Tankfüllstand zum Zeitpunkt t=0 (Block 11).

Die beiden Grenzwerte (v_{Grenz1} und v_{Grenz2}) betragen beispielsweise 8 km/h. Kleinere Werte sowie unterschiedliche Geschwindigkeitsgrenzwerte sind möglich.

## Patentansprüche

1. Verfahren zur gesteuerten Zugabe eines Additivs in den Kraftstoffvorratsbehälter (1) einer Fahrzeug-Brennkraftmaschine, insbesondere eines mit einem Abgasrußfilter ausgerüsteten Dieselmotors, dessen Rußfilter durch das Additiv verbessert freibrennbar ist, bei dem der Zeitpunkt und die Menge der dosierten Zugabe von einer durch eine in das Fahrzeug integrierten Meßeinrichtung (Additiv-Dosier-Elektronik 6) ermittelten Erhöhung des Kraftstoffvorratsfüllstandes abhängig ist,
**dadurch gekennzeichnet,**
daß der Kraftstoffüllstand (Tankgeber 5) bei sich mit laufendem Motor bewegendem Fahrzeug in vorgegebenen Zeitintervallen gemessen und gemittelt über eine vorbestimmte Anzahl dieser Zeitintervalle einem Meßwertspeicher (Additiv-Dosier-Elektronik 6) zugeführt wird, in dem der jeweils zuletzt gespeicherte Mittelwert nach Vergleich mit einem nachfolgenden jeweils neu zu speichernden Mittelwert gelöscht und durch den neuen Mittelwert ersetzt wird, der im Meßwertspeicher (Additiv-Dosier-Elektronik 6) bis zu einem neuen Vergleich gespeichert bleibt,
wobei ein bei dem Mittelwert-Vergleich festgestellter über einem vorgegebenen Toleranzmaß liegender Differenzwert eine der Füllstandserhöhung proportionale Additivzugabe auslöst.

2. Verfahren nach Anspruch 1,
**dadurch gekennzeichnet,**
daß eine Additivzugabe nur oberhalb einer vorbestimmbaren Fahrgeschwindigkeit erfolgen kann.

## Claims

1. A method for the controlled admixture of an additive to the fuel supply tank (1) of a motor vehicle internal combustion engine, particularly of a diesel engine equipped with an exhaust soot filter, of which the soot filter can be burned free in an improved manner by the additive and in which the moment at which and the quantity in which the measured additive is incorporated depend upon a rise in the level of the fuel supply ascertained by a measuring device (electronic additive dispenser 6) integrated into the vehicle, characterised in that the fuel level (tank transmitter 5) is measured at predetermined intervals of time while the vehicle is in motion and with the engine running and averaged over a predetermined number of these time intervals, fed to a measured value memory (electronic additive dispenser 6) in which the last stored mean value, after being compared with a subsequent mean value which is to be stored as the new value, is cancelled and replaced by the new mean value which remains stored in the measured value memory (electronic additive dispenser 6) until there is a fresh comparison, whereby a difference located above a predetermined tolerance and ascertained upon comparison of the mean values triggers an addition of additive in proportion to the increase in filling level.

2. A method according to Claim 1, characterised in that additive can only be added at above a predeterminable travelling speed.

## Revendications

1. Procédé pour l'adjonction commandée d'un additif dans le réservoir de carburant (1) d'un moteur à combustion interne d'un véhicule, notamment d'un moteur diesel équipé d'un filtre d'élimination de la suie des gaz d'échappement, qui peut brûler librement d'une manière améliorée grâce à la présence de l'additif selon lequel l'instant et la quantité de l'adjonction dosée dépendent d'un accroissement du niveau de réserve du carburant, qui est déterminé par un dispositif de mesure (unité électronique 6 de dosage de l'additif) intégré dans le véhicule,
caractérisé en ce
que le niveau du carburant (capteur 5 de la cuve) est mesuré à des intervalles de temps prédéterminés, alors que le véhicule se déplace et que son moteur tourne, et que la moyenne de ce niveau formé sur un nombre prédéterminé de ces intervalles de temps est envoyée à une mémoire de valeurs de mesure (unité électronique 6 de dosage de l'additif), dans laquelle la valeur mémorisée respectivement en dernier lieu est effacée après comparaison à une valeur moyenne suivante devant être respectivement à nouveau mémorisée, et est remplacée par la nouvelle valeur moyenne, qui reste mémorisée dans la mémoire de valeurs de mesure (unité électronique 6 de dosage de l'additif) jusqu'à une nouvelle comparaison,
une valeur de différence, fixée lors de la comparaison des valeurs moyennes et supérieure à une valeur de tolérance prédéterminée déclenchant une adjonction de l'additif, proportionnelle à l'accroissement du niveau de remplissage.

2. Procédé selon la revendication 1, caractérisé en ce qu'une adjonction de l'additif peut être exécutée seulement au-dessus d'une vitesse de déplacement pouvant être prédéterminée.
